(19) **Europäisches Patentamt**
**European Patent Office**
**Office européen des brevets**

(11) **EP 4 209 952 B1**

(12) **EUROPEAN PATENT SPECIFICATION**

(45) Date of publication and mention
of the grant of the patent:
**13.08.2025 Bulletin 2025/33**

(51) International Patent Classification (IPC):
**G06F 21/62** *(2013.01)* **H04W 12/02** *(2009.01)*

(52) Cooperative Patent Classification (CPC):
**G06F 21/6254; H04W 12/02**

(21) Application number: **22150435.0**

(22) Date of filing: **06.01.2022**

(54) **A METHOD, A COMPUTER PROGRAM PRODUCT AND A DEVICE FOR DYNAMIC SPATIAL ANONYMIZATION OF VEHICLE DATA IN A CLOUD ENVIRONMENT**

VERFAHREN, COMPUTERPROGRAMMPRODUKT UND VORRICHTUNG ZUR DYNAMISCHEN RÄUMLICHEN ANONYMISIERUNG VON FAHRZEUGDATEN IN EINER CLOUD-UMGEBUNG

PROCÉDÉ, PRODUIT-PROGRAMME INFORMATIQUE ET DISPOSITIF D'ANONYMISATION SPATIALE DYNAMIQUE DE DONNÉES DE VÉHICULES DANS UN ENVIRONNEMENT EN NUAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.07.2023 Bulletin 2023/28**

(73) Proprietor: **VOLKSWAGEN AG**
**38440 Wolfsburg (DE)**

(72) Inventors:
• **Alazzawi, Sabina**
**80807 München (DE)**
• **Dondapati, Chaitanya Kumar**
**85640 Putzbrunn (DE)**
• **Niestroj, Richard**
**80802 München (DE)**
• **Resce, Pierpaolo**
**82110 Germering (DE)**

(56) References cited:
**EP-A1- 2 487 639    DE-B3- 102019 201 530**

• **MARCO GRUTESER ET AL: "Anonymous Usage of Location-Based Services Through Spatial and Temporal Cloaking", PROCEEDINGS OF THE 1ST INTERNATIONAL CONFERENCE ON MOBILE SYSTEMS, APPLICATIONS AND SERVICES, MOBISYS '03, 1 January 2003 (2003-01-01), New York, New York, USA, pages 31 - 42, XP055732558, DOI: 10.1145/ 1066116.1189037**

## Description

The invention is related to a method for dynamic spatial anonymization of vehicle data in a cloud environment according to the independent method claim. Further, the invention is related to a corresponding computer program product according to the independent product claim. Furthermore, the invention is related to a corresponding device, especially backend device, according to the independent device claim.

Real-time vehicular data plays a key role in current data driven projects. Typical use cases concerned with the analysis of vehicular information extracted from installed sensors include e.g. the creation of maps providing parking or weather information. The displayed information thereby may be a result of advanced analytics including, in particular, forecasts that can be in return consumed by the vehicle.

Due to in-car computational constraints, advanced analytics usually take place in a cloud environment. Thus, the sensor data is extracted and shared with a cloud platform. This approach requires, however, the anonymization of the extracted data due to data protection requirements. The sensitive data content for the considered use cases is represented by the tuple of temporal and spatial data which un-anonymized allows for the exact location of the data creator at an exact point in time. Present state of the art technologies, therefore, shift the extracted data by an additive constant with respect to time or space. The goal, thereby, is to decouple the time and space tuple and further hide the identity of the data creator in an anonymization group that aggregates data from several sources/creators. The amount of the applied temporal or spatial shift can depend on the traffic density. The shift may be increased with decreasing traffic density and vice versa decreased with increasing traffic density.

Although the anonymization approach of pure temporal shifts has undergone several iterations improving e.g. the quality of the resulting anonymized data, current state of the art spatial anonymization techniques lack optimization.

Presently, spatial anonymization is based on static grid structures with predefined grid sizes which do not allow for arbitrary dynamic adjustments based on the underlying traffic density.

This circumstance usually results in less accurate applications as the required level of data granularity is mostly not met in such a framework, finally ruling out certain use cases.

On the other hand, the static grid spatial anonymization approach also neglects sparsely populated areas which typically imply small traffic densities. This is due to the predefined grid sizes that do not exceed a certain limit. As a result, data extracted in such areas usually is bound to deletion as anonymization fails.

Furthermore, current spatial anonymization techniques lack runtime optimization. Besides, current spatial anonymization techniques have to process big data loads. Since most use cases in consideration rely on big vehicle fleets, the state of the art spatial anonymization struggles to meet this requirement.

Still on the other hand, spatial anonymization approach which may use dynamic spatial anonymization may lead to overlapping of spatial aggregated data sets. With other words a single vehicle contributing to more than one spatial aggregated data set may then be re-identified with some probability.

Some known techniques are shown in DE 10 2019 201 530 B3 and EP 2 487 639 A1.

The aim of the present invention is to provide an improved method for dynamic spatial anonymization of vehicle data in a cloud environment. Especially, the aim of the present invention is to provide a flexible and/or adaptive method for dynamic spatial anonymization of vehicle data in a cloud environment, which allows for arbitrary sizes and locations of the anonymization areas and does not rely on underlying static grid structures, which serve for enhanced privacy protection, even for sparsely covered areas, and which serve for enhanced privacy protection, especially for areas with many participants which may contribute multiple times for spatial aggregated data. Furthermore, the aim of the present invention is to provide an improved method for dynamic spatial anonymization of vehicle data in a cloud environment, which enhances aggregation techniques and which increases the quality and the reliability of the anonymized data. Moreover, the aim of the present invention is to provide an improved method for dynamic spatial anonymization of vehicle data in a cloud environment, which reduces computational runtime, in particular, in case of big data loads. Also, the aim of the invention is to provide a corresponding computer program product. Besides, the aim of the invention is to provide a device, especially backend device, for dynamic spatial anonymization of vehicle data in a cloud environment.

According to the first aspect, embodiments of the invention provide a method for dynamic spatial anonymization of vehicle data in a cloud environment with the features of the independent method claim 1. According to the second aspect, embodiments of the invention provide a corresponding computer program product for a respective method with the features of the independent product claim 11. According to the third aspect, embodiments of the invention provide a corresponding device, especially backend device, for dynamic spatial anonymization of vehicle data in a cloud environment with the features of the independent device claim 12. Details and features disclosed on individual aspects of the invention also apply to the other aspects of the invention and vice versa.

According to the first aspect, A method for dynamic spatial anonymization of vehicle data in a cloud environment, the method comprising:- collecting vehicle data $(D(t))$,- spatial aggregation of the vehicle data $(D(t))$, providing especially two level aggregation:- aggregation of vehicle data $(Di(t))$, coming from a single vehicle (10), to a corresponding data point (Di_mean) and- aggregation of data points (Di_mean), coming from a group (G) of vehicles (10) comprising a particular number (k) of vehicles (10), to a spatial aggregated data set (Dj_mean),wherein the spatial aggregation is provided using a k-anonymity methodology,and wherein a spatial aggregated data set (Dj_mean) aggregates data points (Di_mean) coming from different vehicles (10) arranged into groups (G) using the k-nearest neighbor grouping,- modifying the spatial aggregated data sets (Dj_mean) in order to reduce overlapping of the spatial aggregated data sets (Dj_mean),wherein overlapping of the spatial aggregated data sets (Dj_mean) means that a single vehicle (10) contributes to more than one spatial aggregated data set (Dj_mean).

Overlapping of the spatial aggregated data sets means that a single vehicle contributes to more than one spatial aggregated data set.

The method may be executed by an external device, such as a backend device in the cloud, in order to save computational power of the vehicle's side and to provide enhanced computational resources for dynamic spatial anonymization of vehicle data.

The actions of the method may be carried out in the given order or in a modified order. Individual actions of the method may be carried out simultaneously and/or repeatedly to allow a flowing process.

For collecting vehicle data, a plurality of participating vehicles may send vehicle data, for example in the form of records and/or measurements, preferably comprising sensor data, such as environmental data, temperature values, humidity values, rain intensity, slipping coefficient, etc., and spatial data, such geographical coordinates, to the external device. The vehicle data may also comprise time stamps.

The collecting of vehicle data may be made done periodically, especially over a time interval, which time interval may be determined by a performing device, preferably individually for different vehicle services, such as navigation services, map services and/or forecast services etc. Each time, after collecting vehicle data within one time interval, the vehicle data will be anonymized before further use, for example for storing, processing and/or providing vehicle services.

The spatial partitioning may also be explained as splitting over geographical areas. The spatial partitioning of the vehicle data may be preferably used for reducing the amount of records intended to be anonymized in one execution.

Vehicle data aggregation within the meaning of the present disclosure may also be explained as compiling of vehicle data with intent to prepare aggregated (or combined) data sets for further data processing. The spatial aggregation may be preferably used for anonymization of the vehicle data, especially within a current time interval, within a corresponding data subset and/or within an associated geographical area.

The presented method solves the above-mentioned problems of static grid sizes and handling of great amounts of data by spatial anonymization approaches. The presented method may be based on a dynamic approach that allows for both dynamic adjustment of grids and dynamic partitioning of big data loads.

In the case of vehicle application, there are massive amounts of geo-related data, which cannot be efficiently anonymized all in one execution. To overcome this challenge, the vehicle data may be splitted spatially by applying geospatial indexing. Geospatial indexing will be described in the following.

I Optional spatial partitioning

Geospatial indexing is the process of partitioning areas of the earth into identifiable grid cells. Geospatial indexing is a preferably faster than indexing to areas with static grid sizes.

For spatial partitioning, especially using geospatial indexing, the world and/or a geographical region of interest may be divided into geographical areas with different resolutions, for example starting from 0 until 15. Resolution may be defined as a number of records over a geographic extent of the area. Each area for each resolution gets its own unique ID. Thus, each data subset within an associated geographical area gets the same ID.

For spatial partitioning, especially using geospatial indexing, following conditions may be provided for splitting the records into subsets:

1. Each data subset comprises a maximal amount (N) of records. The maximal amount of records may be chosen based upon computational capacity constraints of the performing device, such as a backend device in the cloud.
2. Each data subset is denoted by a unique ID. Each unique ID of data subsets correspond to the unique ID of associated geographical areas. The IDs of data subsets within the present disclosure may be represented by the counter.

For spatial partitioning, especially using geospatial indexing, following actions may be executed:

I.1. For each time interval in which spatial anonymization should be performed iteratively over geo-coordinates starting from the resolution 0 (highest resolution level).
I.2. If found any geographical area comprising a corresponding data subset which has less than N records, then assign unique ID to this data subset.
I.3. Identify geographical areas comprising corresponding data subsets which have more than N records.
I.4. Split the geographical areas comprising corresponding data subsets which have more than N records with an incremental resolution which is now 1.

I.5. Repeat steps I.2, I.3 and I.4 until all records are assigned to geographical areas comprising corresponding data subsets which have less than N records or until the resolution reaches maximal available value, for example 15.

II Spatial aggregation, comprising preferably two level aggregation

The dynamic spatial anonymization follows preferably a two level aggregation approach.

Vehicle data aggregation may further preferably use the information advantage that is available for non-anonymized data prior to anonymization.

Vehicle data aggregation provides a combination of multiple vehicle data, records and/or measurements aggregated to a lower number of values, and thus providing anonymization,

first level i    aggregation within vehicle data from every single vehicle, preferably reducing the effect of sensor noise, for example removing data outliers, and/or highlighting some unusual measurement of interest.

second level j    aggregation within vehicle data coming from several vehicles in the same area combined to groups of k-members, so-called anonymization groups.

Thus, the amount of vehicle data to be anonymized in one execution may be considerably reduced with the help of spatial aggregation.

By assuming that the information measured from a single vehicle does not vary significantly in a certain time interval, and the sensor sampling frequency is higher than needed, it is possible to aggregate the data coming from a single vehicle without losing significant information. Thus, the relevant information may be reliably maintained.

For example by collecting temperature measurements in a certain area, the temperature sampling frequency on the vehicle may be 1 Hz. It may be possible to aggregate together the temperature information provided from a single vehicle in the same time interval, e.g. 10 s, without losing relevant information. The temperature usually does not changing significantly within in 10 s. Also, the vehicle displacement in such a time interval may be neglected for the specific use-case, but the amount of data to process is 10 times smaller.

For example, by collecting the rain intensity, it may happen that the vehicle passes under some roof, bridge or tree. In this case these unusual measurement may be considered as an outlier in the 10 s time window. The data aggregation may preferably filter out the effects of such outliers.

The data aggregation may also highlight some uncommon measurements. For example, by collecting the slipping coefficient of the road in a certain area, in a certain time, due to ice slabs on the street, it is possible to take into account each single ice slab on the road, even if small. Aggregated data in this case will contain the information about the "ice", even if the most of the 10 s time interval there was no ice on the road.

Thus, the data quality may be improved with the help of filtering and/or highlighting the vehicle data.

In general for each sensor type, signal source and/or data type, a different aggregation methodology may be applied that have proven to be valuable for the specific cases. Aggregation methodologies comprehend statistical indicators (mean, max, n-th percentile, etc...), a combination of them, or functions implemented ad hoc for the specific use-case.

Thus, improving quality and reliability of data prior to anonymization.

A second level of aggregation is then performed between measurements coming from a set of several vehicles in the same time interval and in the same area. This second step of aggregation allows to reach the anonymization goal, because from the aggregated data it would be extremely unlikely to go back to the single vehicle that contributed to the aggregated data.

The present method is improved with regard to enhanced privacy protection, especially for geographical areas, in which vehicles may be multiply arranged to different anonymization groups, so that vehicles may contribute for more than one spatial aggregated data set. It may for example occur during second level aggregation, so that the spatial aggregated data sets may obtain overlapping portions.

The present method recognizes, that the second level aggregation may cause scenarios in which the anonymization groups may obtain common participants. Common participants within the anonymization groups may result in unauthorized tracing of these participants. The anonymity of such participants may be at risk. More precisely, overlapping portions of the spatial aggregated data sets may be assigned with higher probability of data creation than other portions, resulting in a potential privacy risk.

The present method addresses this circumstance to avoid such scenarios allowing for unauthorized tracing of vehicles as data sources. The present method optimizes privacy and ensures uniform probability distribution for locating data within the groups of vehicles during second level aggregation, that is during aggregation data points.

To protect the vehicles within the anonymization groups with higher probability, the invention provides a technique to resolve potentially overlapping portions of spatial aggregated data sets. The presented method may modify or with other words distort the spatial aggregated data sets by changing the sizes, shapes and/or location of their groups, preferably in a random way. The modification of the spatial aggregated data sets prevents privacy risks, since potentially overlapping portions within the spatial aggregated data sets with higher localization probabilities may be destroyed. In particular, the occurrence of potential consecutive series of portions within the spatial aggregated data sets with high localization probabilities may be almost prevented due to this method. At the same time, the anonymization of the data content is still guaranteed as the randomized spatial aggregated data sets contain substantially information aggregated within an almost non-overlapping anonymization group.

Preferably, the vehicle data may be collected periodically within a time interval. More preferably the time interval may be chosen depending on vehicle service, sensor type, signal source and/or data type. Thus, the properties and requirements of vehicle services and/or evaluable vehicle data may be advantageously taken into account by adapting the dynamic of the spatial anonymization.

According to one advantage of the method, the spatial aggregation may be used for anonymization of the vehicle data, especially within a current time interval, within a corresponding data subset and/or within an associated geographical area. According to another advantage of the method, the optional spatial partitioning may be used for reducing the amount of records intended to be anonymized in one execution.

Further, the spatial aggregation is provided using the k-anonymity methodology. More a spatial aggregated data set aggregates data points coming from different vehicles arranged into groups using the k-nearest neighbor grouping. In this way, effective data protection may be provided with simple techniques and without much computational effort.

Furthermore, it may be preferable, if the modification of the spatial aggregated data sets may be performed randomly. Thus, a computationally preferable way to resolve the overlapping may be provided.

Moreover, it may be preferable, if the modification of the spatial aggregated data sets will be performed through changing size, shape and/or location of the corresponding groups. Thus, preferable techniques to modify and/or distort the groups may be provided.

Preferably, the vehicle data may comprise sensor data and spatial data. Hereby the sensor data may comprise environmental data, temperature values, humidity values, rain intensity, slipping coefficient, etc. Therefore, a data point coming from a single vehicle comprises aggregated sensor data and aggregated spatial data for the single vehicle. Thus, a spatial aggregated data set coming from a group of vehicles comprises aggregated sensor data and aggregated spatial data for the group of vehicles.

According to one further advantage of the method, vehicle data within a data point may be filtered in order to exclude unusual measurements. Thus, the quality and reliability of the data may be achieved.

According to one still further advantage of the method, vehicle data within a data point may be highlighted in order to detect environmental effects, such as ice slabs on the street, in highly restricted areas within a particular geographical area. Thus, restricted effects that may not be registered by all participants can still be detected by the method. Therefore, the value of the data may be significantly increased.

For increased functionality and suitability of the method, the spatial aggregation may be performed using different aggregation methodologies for different vehicle services, sensor types, signal sources and/or data types. Hereby, a particular aggregation methodology may be chosen depending on vehicle service, sensor type, signal source and/or data type.

Advantageously, the spatial partitioning may be provided using a method of geospatial indexing.

Thus, dynamic adjustment of grids and dynamic partitioning of big data loads may be provided.

Further, it may be possible, that the spatial partitioning may be provided using an iterative splitting of incoming sets of records into geographical areas having different resolution levels. Thus, a reduction of big data loads may be provided in an iteratively way.

Furthermore, it may be possible, that the spatial partitioning may be provided until a data subset comprises an amount of records lower than the maximal amount of records. Thus, the computational constrains of a performing device may be addressed.

More preferably, the maximal amount of records may be chosen according to computational capacity of a performing device.

According to a further aspect of the invention a computer program product is provided according to claim 11, comprising instructions which, when the program is executed by a computer, cause the computer to carry out a method as described above. With the help of the computer program product, the same advantages may be achieved as described above in the context of the inventive method. Full reference is made to these advantages in the present case.

According to a further aspect of the invention a device according to claim 12, especially backend device, is provided, comprising a memory device in which program code is stored, and a computing device configured to execute the program code, wherein when executing the program code, a method may be performed as described above. With the help of the device, the same advantages may be achieved as described above in the context of the inventive method. Full reference is made to these advantages in the present case.

Preferably, the memory device may comprise a database for spatial aggregated data sets. With the help of the database, the anonymized vehicle data may be stored und easily used, especially combined with a goal that the individual vehicles cannot be re-identified, while the data remains useful for vehicle services.

Advantageously, the computing device may be configured to provide vehicle services, comprising navigation services, map services and/or forecast services etc., to participating vehicles using the aggregated data sets. More preferably, the computing device may be configured to provide different vehicle services depending on service type, signal source and/or data type. Thus, the different vehicle services may be provided with more quality and increased functionality.

Embodiments of the invention and its further developments as well as its advantages will be explained in more detail below using figures. The figures show schematically:

Fig. 1 generic representation of data partitioning using geospatial indexing,

Fig. 2 single vehicle data aggregation,

Fig. 3 multi vehicle data aggregation,

Fig. 4 overlapping anonymization groups,

Fig. 5 modified anonymization groups,

Fig. 6 anonymization group representation by corner coordinates,

Fig. 7 modified structure of a reshaped anonymization group, and

Fig. 8 modified structure of a reshaped anonymization group being shifted.

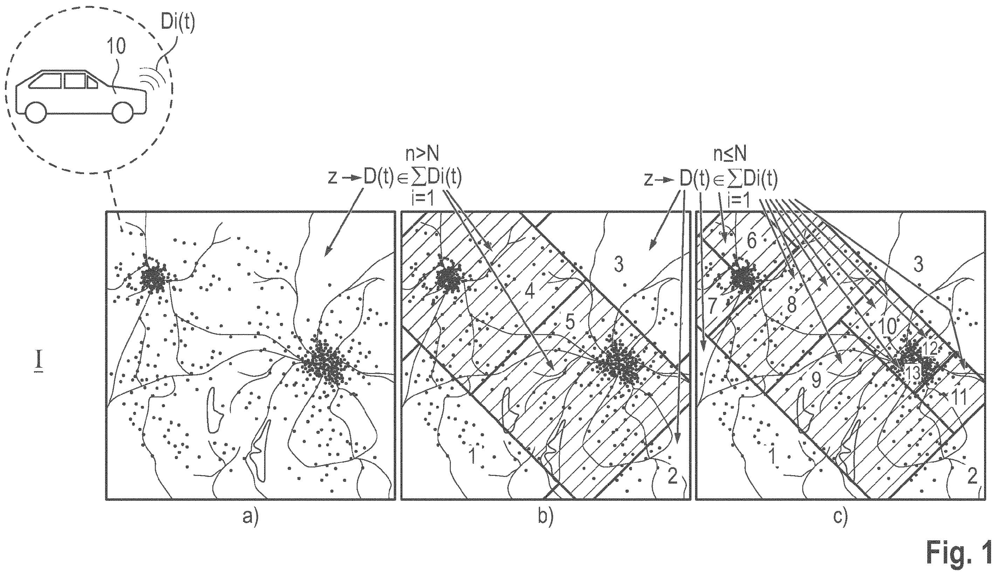

Fig. 1 to 5 serve for explaining an inventive method for dynamic spatial anonymization of vehicle data in a cloud environment,
the method comprising:

0 (dynamic) collecting vehicle data D(t),
I optionally (dynamic) spatial partitioning (or geospatial indexing and/or splitting) the vehicle data D(t) into data subsets DZ(t), especially dynamically, associated with different geographical areas Z of various sizes and comprising a maximal amount N of records within each data subset DZ(t),
II (dynamic) spatial aggregation (or compiling and/or combining) the vehicle data D(t), preferably within the data subsets DZ(t) obtained by the optionally spatial partitioning, providing especially two level aggregation:
first level i aggregation vehicle data Di(t) (within a data subset DZ(t)), coming from a single vehicle (10) (within an associated geographical area Z), to a corresponding data point Di_mean and
second level j aggregation data points Di_mean, coming from a group of vehicles 10 comprising a particular number k of vehicles 10 (within an associated geographical area Z), to a spatial aggregated data set Dj_mean,
III modifying the spatial aggregated data sets

Dj_mean in order to reduce overlapping of the spatial aggregated data sets Dj_mean.

The method may be executed by an external device 20, such as a backend device in the cloud, in order to save computational power of the vehicle's side and to provide enhanced computational resources for providing improved vehicle services.

The present method provides variable grid sizes and handles great amounts of data in a preferable effective manner. The presented method is based on a dynamic approach that allows for both dynamic adjustment of grids and dynamic partitioning of big data loads.

In the case of vehicle application, there are massive amounts of geo-related data, which cannot be efficiently anonymized all at the same time and/or in one execution. To overcome this challenge, the vehicle data D(t) may be splitted spatially, for example by applying geospatial indexing, as explained in the following and represented in fig. 1.

I Optional spatial partitioning

For spatial partitioning, especially using geospatial indexing, the world and/or a geographical region (s. the first representation a in fig.1) of interest may be divided into geographical areas with different resolutions. In an example, the resolution may be iterated from 0 until 15. Resolution may be represented by a number of records in a geographic area. The records are shown in fig. 1 as single points. As the second and the third representations b and c in fig. 1 show, each area Z for each resolution gets its own unique ID (for example from 1 to 13). Thus, each data subset DZ(t) within an associated geographical area gets the same ID.

For spatial partitioning/geospatial indexing, following conditions may be provided for splitting the vehicle data D(t) into subsets DZ(t):

1. Each data subset DZ(t) comprises a maximal amount N of records. The maximal amount N of records may be chosen based upon computational capacity constraints of the performing device 20, such as backend device in the cloud.
2. Each data subset DZ(t) is denoted by a unique ID (s. number Z from 1 to 13 in fig. 1). Each unique ID of the data subsets DZ(t) corresponds to the unique ID of associated geographical areas Z. Thus, the IDs of data subsets DZ(t) are represented by the counter Z.

As fig. 1 represents, following actions may be executed for spatial partitioning/geospatial indexing:

I.1 For each time interval in which spatial anonymization should be performed iteratively over geo-coordinates starting from the resolution 0 (highest resolution level, the first representation a in fig. 1).
I.2 If found any geographical area Z comprising a corresponding data subset DZ(t) which has less than N records, then assign unique ID to this data subset DZ(t).

I.3 Identify (see areas 4 and 5 in the second representation b in fig. 1) geographical areas Z comprising corresponding data subsets DZ(t) which have more than N records.

I.4 Split the geographical areas Z comprising corresponding data subsets DZ(t) which have more than N records with an incremental resolution which is now 1.

I.5 Repeat steps I.2, I.3 and I.4 until all records are assigned to geographical areas Z comprising corresponding data subsets DZ(t) which have less than N records (the third representation c in fig. 1) or until the resolution reaches maximal available value, for example 15.

Representation of data partitioning using geospatial indexing shown in fig. 1 illustrates how the method iteratively splits the incoming vehicle data D(t).

a) Initial vehicle data D(t) collected from participating vehicles 10. This vehicle data D(t) contains more than N records and it is computationally intensive to perform anonymization on it.

b) First step of (dynamic) spatial partitioning (geospatial indexing and/or splitting). Geographical areas Z = 1, Z = 2 and Z = 3 contain less than N records and may be used as input for an efficient execution of the anonymization. Geographical areas Z = 4 and Z = 5 contain more than N records and need to be further divided in sub-areas.

c) Outcome of (dynamic) spatial partitioning (geospatial indexing and/or splitting). All the areas Z = 1, 2, 3, 6, 7, 8, 9, 10, 11, 12, 13 contain less than N records and may be used to perform anonymization in an efficient way providing representative results.

This approach results in dynamic grid sizes that may span in reality from less than $0.01\ km^2$ to $100\ km^2$, as shown in fig. 1. In contrast to state of the art methods that only anonymize on fixed grid levels not leveraging the smaller grid sizes that could be possible because of high vehicle coverage in dense, urban areas.

II Spatial aggregation, comprising preferably two level i, j aggregation

The dynamic spatial anonymization follows preferably a two level i, j aggregation approach.
Vehicle data aggregation may use the information advantage that is available for non-anonymized vehicle data D(t) prior to anonymization in action II.
Vehicle data aggregation II provides a combination of multiple vehicle data D(t), that is records and/or measurements and/or pints in the view of fig. 1, aggregated to a lower number of values, and thus providing anonymization,

| | |
|---|---|
| first level i | aggregation within vehicle data Di(t) from every single vehicle 10, preferably reducing the effect of sensor noise, for example removing data outliers, and/or highlighting some unusual measurement of interest. |
| second level j | aggregation within vehicle data D(t) coming from several vehicles 10 in the same area combined to groups G of k-members, so called anonymization groups. |

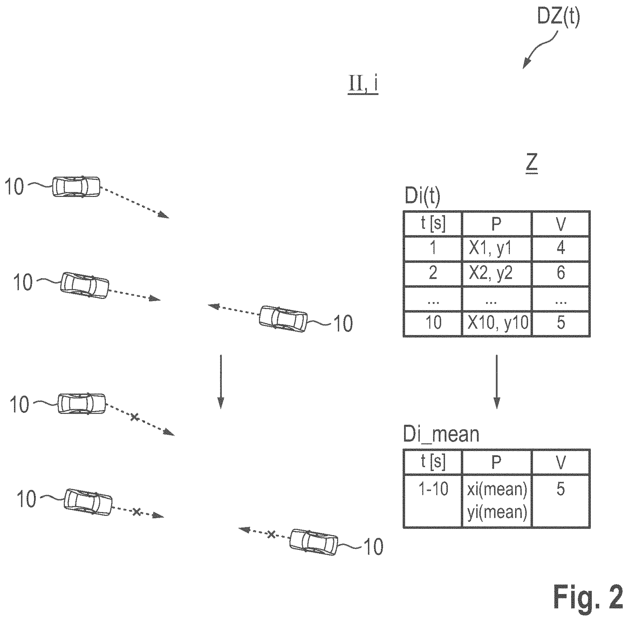

Thus, the amount of vehicle data D(t) to be anonymized (Dj_mean) in one execution may be considerably reduced with the help of spatial aggregation II.
A first level i of aggregation is illustrated in fig. 2.
By assuming that the vehicle data D(t) from a single vehicle 10 does not vary significantly in a certain time interval dt, and the sensor sampling frequency is higher than needed, it is possible to aggregate the vehicle data D(t) coming from a single vehicle 10 without losing significant information. Thus, the relevant information may be reliably maintained within a corresponding data point Di_mean.
For example, by collecting temperature measurements in a certain area Z, the temperature sampling frequency on the vehicle may be 1 Hz. It may be possible to aggregate together the temperature information provided from a single vehicle 10 in the same time interval, e.g. 10 s, without losing relevant information. The temperature usually does not change significantly within in 10 s. Also, the vehicle displacement in such a time interval dt may be neglected for the specific vehicle service, but the amount of data to process by anonymization is 10 times smaller.
For example, by collecting the rain intensity measurements, it may happen that the vehicle 10 passes under some roof, bridge or tree. In this case these unusual measurements may be considered as an outlier in the 10 s time window. The vehicle data D(t) aggregation may preferably filter out the effects of such outliers.
The data aggregation may also highlight some uncommon measurements. For example by collecting the slipping coefficient of the road in a certain area, in a certain time, due to ice slabs on the street, it is possible to keep into account for each single ice slab on the road, even if small. Aggregated data in this case will contain the information about the "ice", even if the most of the 10 s time-interval there was no ice on the road.
Thus, the data quality may be improved with the help of filtering and/or highlighting the vehicle data D(t).
In general for each sensor type, signal source and/or data type, a different aggregation methodology may be applied that has proven to be valuable for the specific cases. Aggregation methodologies comprehend statistical indicators (mean, max, n-th percentile, etc...), a combination of them, or functions implemented ad hoc for the specific use-case.

Thus, improving quality and reliability of data prior to anonymization.

In the first step i, time series data D(t) from single vehicles 10 will be recorded over a time interval dt, comprising positional information (spatial data P) along the trajectory of a vehicle 10 together with recorded information (sensor data V) of the vehicle sensors. As illustrated in fig. 2 a single vehicle trajectory over a time interval dt, for example from 1 to 10 s, is depicted using arrows, where every dot stands for a single recorded spatial data P and a corresponding sensor data V. This vehicle trajectory is then aggregated into one data point Di_mean illustrated using the cross. The vehicle data D(t) from vehicles 10 will be aggregated into corresponding data points Di_mean containing only an aggregate. Thus, no exact position (spatial data P) but only an aggregation of the perceived sensor data V will be maintained within the data points Di_mean.

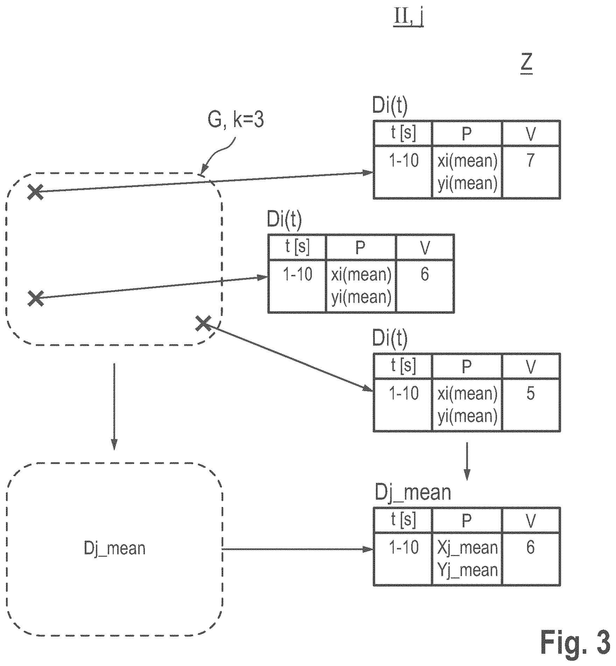

A second level j of aggregation is illustrated in fig. 3.

A second level j of aggregation is thus performed within a set of vehicles 10 in the same time interval dt and in the same geographical area Z. This second step j of aggregation allows to reach the anonymization goal, because from the aggregated data it would be extremely unlikely to go back to the single vehicle 10 that contributed to the aggregated data set Dj_mean.

In the second step j of the spatial anonymization following the k-anonymity methodology, multiply aggregated data points Di_mean coming from different vehicles 10 will be arranged in groups G of k vehicles 10, preferably using the k-nearest neighbor method. Data of these groups G of k vehicles 10 (for example k=3) are then aggregated again leaving only information about the portion of the geographical area Z where the group G of vehicles were located in and aggregate values. The number of groups G may be smaller than the number of vehicles 10 in the corresponding geographical area Z.

By following the dynamic spatial anonymization, vehicle data D(t) may be fully anonymized within flexible determined geographical areas Z following the methodology of k-anonymity and preferably the k-nearest neighbor grouping/classification.

The dynamic feature of spatial partitioning I allows for arbitrary sizes and locations of the anonymization areas Z.

With the help of the integrating spatial aggregation II, the data quality enhancing aggregation techniques, the reliability of the anonymized data output may be increased.

Furthermore, the presented method, combining both techniques: spatial partitioning I and spatial aggregation II, reduces computational runtime, in particular, in case of big data loads and results in an enhanced privacy protection, even for sparsely covered areas that may now be incorporated within the dynamic grid approach.

The present method, especially the action III of the method, is improved with regard to enhanced privacy protection, especially for geographical areas Z having a relative high number of data sources. In such areas Z a single vehicle 10 may be multiply arranged to different groups G. In this case, the spatial aggregated data sets Dj_mean may overlap. The overlapping of the spatial aggregated data sets Dj_mean may result in unauthorized tracing of overlapping portions and thus of vehicles 10 contributing as data sources. The anonymity of vehicles 10 may be endangered. More precisely, the overlapping portions of the spatial aggregated data sets Dj_mean may be tracked with higher probability than other portions in the groups G, resulting in a potential privacy risk for contributing vehicle 10.

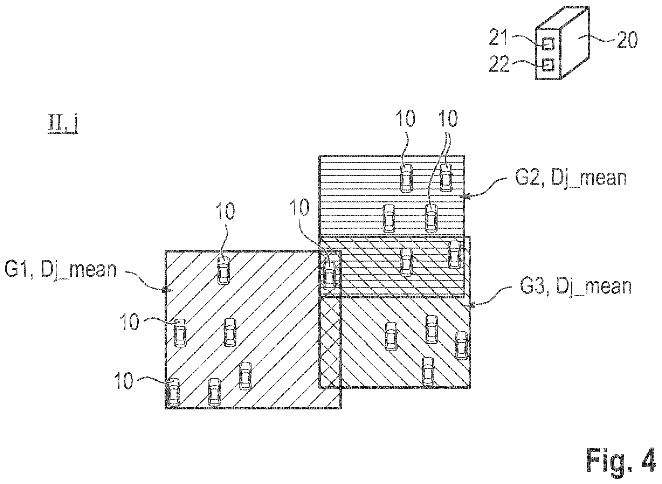

Such a scenario is illustrated in fig. 4, where for example the minimal group size is 7 vehicles 10. Different groups G1, G2, G3 are achieved in three different positions. Although within each group G1, G2, G3, the identity of vehicles as data sources is hidden in a group, the combination of all three groups G1, G2, G3 yields an overlapping area of much smaller size than the original group sizes. Fig. 4 shows a probable case of only a single vehicle 10 as a data creator originally providing information in this small intersection portion. In case of a consecutive series of such scenarios of overlapping portions, this might result in a reduction of privacy.

The present method addresses this circumstance to avoid such scenarios allowing for unauthorized tracing of vehicles 10. The present method optimizes privacy and ensures uniform probability distribution for locating data within the groups of vehicles during the second level aggregation j, that is during aggregation data points Di_mean.

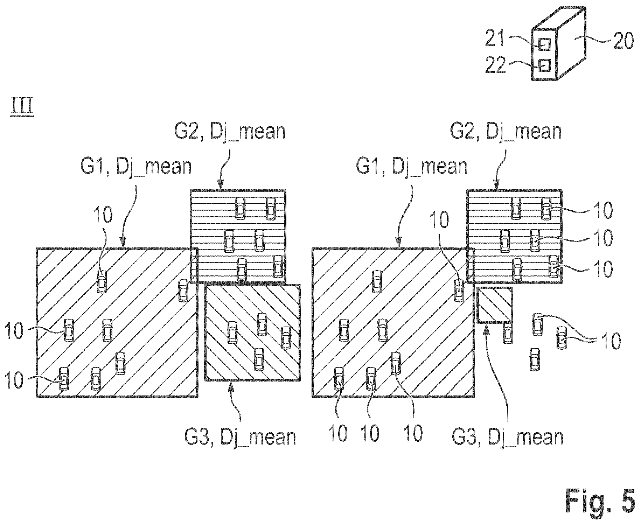

As figure 5 illustrates especially the action III of the method, according to which, a technique to resolve potentially overlapping portions of spatial aggregated data sets Dj_mean is provided. This technique serves to protect the vehicles 10 within the groups G with higher probability, through the modification the spatial aggregated data sets Dj_mean. The modification may be made for example through changing sizes, shapes and/or locations of the corresponding groups G, preferably in a random way. The modification of the spatial aggregated data sets Dj_mean prevents privacy risks, since potentially overlapping portions with higher localization probabilities may be avoided. Especially, the occurrence of potential consecutive series of portions within the spatial aggregated data sets Dj_mean with high localization probabilities may be almost prevented due to this method. At the same time, the reliability of data content is still guaranteed as the randomized spatial aggregated data sets Dj_mean contain substantial information aggregated within an non-overlapping anonymization group G.

In detail, the modification of the spatial aggregated data sets Dj_mean may be provided as follows:

Let v be a vector describing a specific anonymization group G, e.g. v may be composed of the geo-coordinates of the corners of the anonymization group G:

$$v = \{(x1, y1), (x2, y2), (x3, y3), (x4, y4)\}:$$

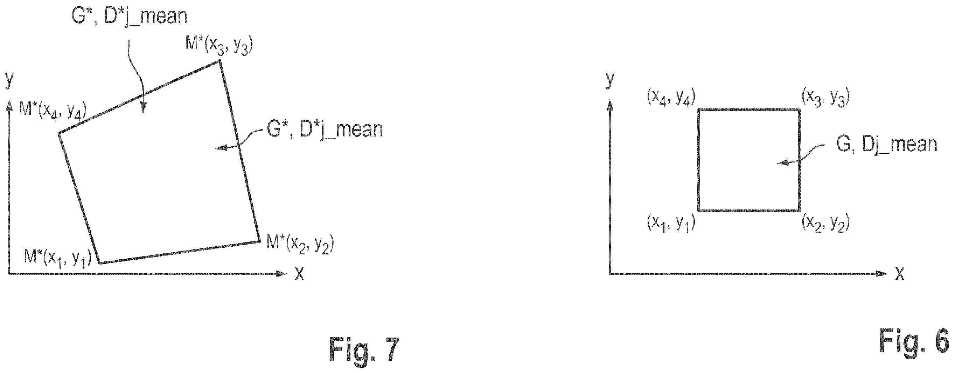

Fig. 6 illustrates group representation by corner coordinates.

Let further M be a 2x2 Matrix of the form:

$$M = \begin{pmatrix} r1 & 0 \\ 0 & r2 \end{pmatrix},$$

with r1 and r2 being random numbers in a certain interval, e.g. [-1, 1]. Then, M will perform a modification of length, shape and/or orientation when applied to a vector (x, y) depending on the values r1 and r2.

If a modifying matrix:

$$M* = \begin{pmatrix} M & 0 & 0 & 0 \\ 0 & M & 0 & 0 \\ 0 & 0 & M & 0 \\ 0 & 0 & 0 & M \end{pmatrix}$$

will be applied to v, which describes an anonymization group G, it will result in a squeezed or stretched anonymization group G*. Thus, the modified spatial aggregated data set D*j_mean is created. Fig. 7 illustrates a modified anonymization group G* and corresponding modified spatial aggregated data set D*j_mean.

To also shift the group G, a shift vector tshift may be added to v, for example as:

$$v* = M * \cdot v + t \text{ shift.}$$

The shift vector t may be a random vector. However, it may be preferable, if the shift vector t may be chosen within predefined thresholds, e.g. in an interval between 0 and 500 meters. The choice of the shift vector tshift may be made for example depending on the resolution of the current geographical area Z. Also, the requirements of the current use-case may be considered by the choice of the shift vector t.

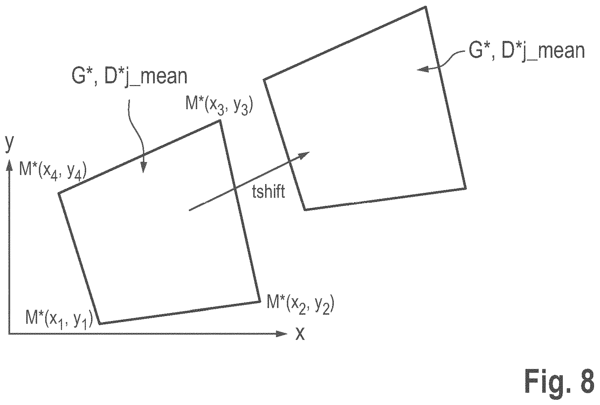

Fig. 8 depicts the modified anonymization group G* and corresponding modified spatial aggregated data set D*j_mean being additionally shifted by the shift vector t.

Therefore, privacy within the dynamic spatial anonymization framework may be enhanced. The present method serves for preferable dynamic anonymization of the provided data content and at the same time ensures maximal protection of the identity of each data creator. The presented method may preferably utilize a randomization approach.

A computer program product comprising a program code for carrying out a method as described above provides an aspect of the invention.

Also, a device 20, especially backend device, provides an aspect of the invention. The device 20 is only shown schematically in fig. 4 und 5. The device 20 comprises a memory device 21 in which program code is stored, and a computing device 22 configured to execute the program code, wherein when executing the program code, a method may be performed as described above. The memory device 21 may further comprise a database for spatial aggregated data sets Dj_mean. The computing device 22 may be configured to provide vehicle services, comprising navigation services, map services and/or forecast services etc., to participating vehicles 10 using the aggregated data sets Dj_mean. Furthermore, the computing device 22 may be configured to provide different vehicle services depending on service type, signal source and/or data type.

The above description of the figures describes the present invention only in the context of examples. Of course, individual features of the embodiments may be combined with each other, provided it is technically reasonable, without leaving the scope of the invention.

**Reference signs**

10    vehicle

20    device
21    memory device
22    computing device

t     time
dt    time interval

D(t)    vehicle data
DZ(t)   data subsets
N       a maximal amount of records within a data subset

Di(t)      vehicle data, coming from a single vehicle
Di_mean    data point

G     group, anonymization group
G*    modified anonymization group

k     particular number of vehicles within a group

Dj_mean     aggregated data set
D*j_mean    modified aggregated data set

G1    group
G2    group
G3    group
G4    group

T     temperature
In     light intensity

P     spatial data
V     sensor data
Z     geographical areas

x     coordinate,
x1     coordinate
x2     coordinate
x3     coordinate
x4     coordinate
y     coordinate
y1     coordinate
y2     coordinate
y3     coordinate
y4     coordinate

M     matrix
M*     modifying matrix

tshift     shift vector

**Claims**

1. A method for dynamic spatial anonymization of vehicle data in a cloud environment, the method comprising:

    - collecting vehicle data (D(t)),
    - spatial aggregation of the vehicle data (D(t)), providing especially two level aggregation:

        - aggregation of vehicle data (Di(t)), coming from a single vehicle (10), to a corresponding data point (Di_mean) and
        - aggregation of data points (Di_mean), coming from a group (G) of vehicles (10) comprising a particular number (k) of vehicles (10), to a spatial aggregated data set (Dj_mean),

    wherein the spatial aggregation is provided using a k-anonymity methodology, and wherein a spatial aggregated data set (Dj_mean) aggregates data points (Di_mean) coming from different vehicles (10) arranged into groups (G) using the k-nearest neighbor grouping,

        - modifying the spatial aggregated data sets (Dj_mean) in order to reduce overlapping of the spatial aggregated data sets (Dj_mean),
        wherein overlapping of the spatial aggregated data sets (Dj_mean) means that a single vehicle (10) contributes to more than one spatial aggregated data set (Dj_mean).

2. The method according to claim 1, **wherein**

    modification of the spatial aggregated data sets (Dj_mean) will be performed randomly, **and/or wherein**
    modification of the spatial aggregated data sets (Dj_mean) will be performed through changing the size, the shape and/or the location of the corresponding groups (G) of vehicles (10).

3. The method according to any one of the preceding claims, **wherein**

    the vehicle data (D(t)) comprise sensor data (V) and spatial data (P),
    **and/or wherein**
    sensor data comprise environmental data, temperature values, humidity values, rain intensity, slipping coefficient, etc.
    **and/or wherein**
    a data point (Di_mean) coming from a single vehicle (10) comprises aggregated sensor data (V) and aggregated spatial data (P) for the single vehicle (10),
    **and/or wherein**
    a spatial aggregated data set (Dj_mean) coming from a group of vehicles (10) comprises aggregated sensor data (V) and aggregated spatial data (P) for the group (G) of vehicles (10).

4. The method according to any one of the preceding claims,
    **wherein**
    vehicle data (D(t)) within a data point (Di_mean) will be filtered in order to exclude unusual measurements.

5. The method according to any one of the preceding claims,
    **wherein**
    vehicle data (D(t)) within a data point (Di_mean) will be highlighted in order to detect environmental effects, such as ice slabs on the street, in highly restricted areas within a particular geographical area (Z).

6. The method according to any one of the preceding claims,
    **wherein**

    the spatial aggregation is performed using different aggregation methodologies for different vehicle services, sensor types, signal sources and/or data types,
    **and/or wherein**
    a particular aggregation methodology is chosen depending on vehicle service, sensor type, signal source and/or data type.

7. The method according to any one of the preceding claims,
   **wherein**

   the spatial aggregation of the vehicle data (D(t)) is performed within data subsets (DZ(t)), **and wherein**
   the data subsets (DZ(t)) are generated using spatial partitioning of the vehicle data (D(t)), so that the data subsets (DZ(t)) are, especially dynamically, associated with different geographical areas (Z) of various sizes and comprising a maximal amount (N) of records within each data subset (DZ(t)).

8. The method according to the preceding claim,
   **wherein**

   the spatial partitioning is provided using a method of geospatial indexing,
   **and/or wherein**
   spatial partitioning is used for reducing the amount of records intended to be anonymized in one execution.

9. The method according to any one of the preceding claims 7 or 8,
   **wherein**

   the spatial partitioning is provided using an iterative splitting of an incoming set of records into geographical areas (Z) having different resolution levels (L),
   **and/or wherein**
   the spatial partitioning is provided until a data subset (DZ(t)) comprises an amount of records lower than the maximal amount (N) of records.

10. The method according to any one of the preceding claims,
    **wherein**
    the maximal amount (N) of records will be chosen according to computational capacity of a performing device.

11. A computer program product comprising instructions which, when the program is executed by a computer, cause the computer to carry out a method according to any one of preceding claims.

12. A device (20), especially backend device, comprising:

    a memory device (21) in which program code is stored, and

    a computing device (22) configured to execute the program code, wherein when executing the program code, a method according to any one of the preceding method claims will be performed.

13. The device (20) according to the preceding claim,
    **wherein**
    the memory device (21) comprises a database for spatial aggregated data sets (Dj_mean).

14. The device (20) according to any one of the preceding device claims,
    **wherein**

    the computing device (22) is configured to provide vehicle services, comprising navigation services, map services and/or forecast services etc., to participating vehicles (10) using the aggregated data sets (Dj_mean),
    **and/or wherein**
    the computing device (22) is configured to provide different vehicle services depending on service type, signal source and/or data type.

**Patentansprüche**

1. Verfahren für eine dynamische räumliche Anonymisierung von Fahrzeugdaten in einer Cloud-Umgebung, das Verfahren umfassend:

   - Sammeln von Fahrzeugdaten (D(t)),
   - räumliche Aggregation der Fahrzeugdaten (D(t)), insbesondere Bereitstellen von zweistufiger Aggregation:
   - Aggregation von Fahrzeugdaten (Di(t)), die von einem einzelnen Fahrzeug (10) stammen, zu einem entsprechenden Datenpunkt (Di_mean) und
   - Aggregation von Datenpunkten (Di_mean), die von einer Gruppe (G) von Fahrzeugen (10) stammen, umfassend eine bestimmte Anzahl (k) von Fahrzeugen (10), zu einem räumlich aggregierten Datensatz (Dj_mean),
   wobei die räumliche Aggregation unter Verwendung einer k-Anonymitätsmethodik bereitgestellt wird und wobei ein räumlich aggregierter Datensatz (Dj_mean) Datenpunkte (Di_mean) aggregiert, die von unterschiedlichen Fahrzeugen (10) stammen, angeordnet in Gruppen (G) unter Verwendung der k-Nearest-Neighbor-Gruppierung,
   - Modifizieren der räumlich aggregierten Datensätze (Dj_mean), um eine Überlappung der räumlich aggregierten Datensätze (Dj_mean) zu verringern, wobei die Überlappung der räumlich aggregierten Datensätze (Dj_mean) bedeutet, dass ein einzelnes Fahrzeug (10) zu mehr als einem räumlich aggregierten Datensatz (Dj_mean) beiträgt.

2. Verfahren nach Anspruch 1,
wobei

die Modifikation der räumlich aggregierten Datensätze (Dj_mean) zufällig durchgeführt wird,
und/oder wobei
die Modifikation der räumlich aggregierten Datensätze (Dj_mean) durch ein Ändern der Größe, der Form und/oder des Standorts der entsprechenden Gruppen (G) von Fahrzeugen (10) durchgeführt wird.

3. Verfahren nach einem der vorstehenden Ansprüche,
wobei

die Fahrzeugdaten (D(t)) Sensordaten (V) und räumliche Daten (P) umfassen,
und/oder wobei
Sensordaten Umgebungsdaten, Temperaturwerte, Feuchtigkeitswerte, Regenintensität, Rutschkoeffizient usw. umfassen,
und/oder wobei
ein Datenpunkt (Di_mean), der von einem einzelnen Fahrzeug (10) stammt, aggregierte Sensordaten (V) und aggregierte räumliche Daten (P) für das einzelne Fahrzeug (10) umfasst,
und/oder wobei
ein räumlich aggregierter Datensatz (Dj_mean), der von einer Gruppe von Fahrzeugen (10) stammt, aggregierte Sensordaten (V) und aggregierte räumliche Daten (P) für die Gruppe (G) von Fahrzeugen (10) umfasst.

4. Verfahren nach einem der vorstehenden Ansprüche,
wobei
Fahrzeugdaten (D(t)) innerhalb eines Datenpunkts (Di_mean) gefiltert werden, um ungewöhnliche Messungen auszuschließen.

5. Verfahren nach einem der vorstehenden Ansprüche,
wobei
Fahrzeugdaten (D(t)) innerhalb eines Datenpunkts (Di_mean) hervorgehoben werden, um Umgebungsauswirkungen, wie Eisplatten auf der Straße, in stark eingeschränkten Bereichen innerhalb eines bestimmten geografischen Gebiets (Z) zu erkennen.

6. Verfahren nach einem der vorstehenden Ansprüche,
wobei

die räumliche Aggregation unter Verwendung unterschiedlicher Aggregationsmethodiken für unterschiedliche Fahrzeugdienste, Sensortypen, Signalquellen und/oder Datentypen durchgeführt wird,

und/oder wobei
eine bestimmte Aggregationsmethodik je nach Fahrzeugdienst, Sensortyp, Signalquelle und/oder Datentyp ausgewählt wird.

7. Verfahren nach einem der vorstehenden Ansprüche,
wobei

die räumliche Aggregation der Fahrzeugdaten (D(t)) innerhalb von Teildatensätzen (DZ(t)) durchgeführt wird,
und wobei
die Teildatensätze (DZ(t)) unter Verwendung eines räumlichen Partitionierens der Fahrzeugdaten (D(t)) erzeugt werden, sodass die Teildatensätze (DZ(t)) insbesondere dynamisch, unterschiedlichen geografischen Gebieten (Z) verschiedener Größe zugeordnet sind und umfassend eine maximale Menge (N) von Aufzeichnungen innerhalb jedes Teildatensatzes (DZ(t)).

8. Verfahren nach dem vorstehenden Anspruch,
wobei

das räumliche Partitionieren unter Verwendung eines Verfahrens des georäumlichen Indizierens bereitgestellt wird,
und/oder wobei
das räumliche Partitionieren verwendet wird, um die Menge von Aufzeichnungen zu reduzieren, die bei einer Ausführung anonymisiert werden sollen.

9. Verfahren nach einem der vorstehenden Ansprüche 7 oder 8,
wobei

das räumliche Partitionieren unter Verwendung eines iterativen Aufteilens eines eingehenden Satzes von Aufzeichnungen in geografische Gebiete (Z) durchgeführt wird, die unterschiedliche Auflösungsstufen (L) aufweisen,
und/oder wobei
das räumliche Partitionieren bereitgestellt wird, bis ein Teildatensatz (DZ(t)) eine Menge von Aufzeichnungen umfasst, die niedriger als die maximale Menge (N) von Aufzeichnungen ist.

10. Verfahren nach einem der vorstehenden Ansprüche,
wobei
die maximale Menge (N) von Datensätzen gemäß der Rechenkapazität einer durchführenden Vorrichtung ausgewählt wird.

11. Computerprogrammprodukt, umfassend Anweisungen, die, wenn das Programm durch einen Computer ausgeführt wird, den Computer veranlassen, ein Verfahren nach einem der vorstehenden Ansprüche auszuführen.

12. Vorrichtung (20), insbesondere eine Backend-Vorrichtung, umfassend:

> eine Speichervorrichtung (21), in der Programmcode gespeichert ist, und
> eine Rechenvorrichtung (22), die zum Ausführen des Programmcodes konfiguriert ist, wobei bei dem Ausführen des Programmcodes ein Verfahren nach einem der vorstehenden Verfahrensansprüche durchgeführt wird.

13. Vorrichtung (20) nach dem vorstehenden Anspruch, wobei
die Speichervorrichtung (21) eine Datenbank für räumlich aggregierte Datensätze (Dj_mean) umfasst.

14. Vorrichtung (20) nach einem der vorstehenden Vorrichtungsansprüche,
wobei

> die Rechenvorrichtung (22) konfiguriert ist, um Fahrzeugdienste, umfassend Navigationsdienste, Kartendienste und/oder Vorhersagedienste usw., für teilnehmende Fahrzeuge (10) unter Verwendung der aggregierten Datensätze (Dj_mean) bereitzustellen,
> und/oder wobei
> die Rechenvorrichtung (22) konfiguriert ist, um je nach Diensttyp, Signalquelle und/oder Datentyp unterschiedliche Fahrzeugdienste bereitzustellen.


## Revendications

1. Procédé d'anonymisation spatiale dynamique de données de véhicule dans un environnement en nuage, le procédé comprenant :

> - la collecte de données de véhicule (D(t)),
> - l'agrégation spatiale des données de véhicule (D(t)), fournissant en particulier une agrégation à deux niveaux :
> - l'agrégation de données de véhicule (Di(t)), provenant d'un seul véhicule (10), en un point de données correspondant (Di_mean) et
> - l'agrégation de points de données (Di_mean), provenant d'un groupe (G) de véhicules (10) comprenant un nombre particulier (k) de véhicules (10), en un ensemble de données spatiales agrégées (Dj_mean),
> dans lequel l'agrégation spatiale est fournie à l'aide d'une méthodologie de k-anonymat, et dans lequel un ensemble de données spatiales agrégées (Dj_mean) agrège des points de données (Di_mean) provenant de différents véhicules (10) agencés en groupes (G) à l'aide du regroupement des k plus proches voisins,
- la modification des ensembles de données spatiales agrégées (Dj_mean) afin de réduire le chevauchement des ensembles de données spatiales agrégées (Dj_mean), dans lequel le chevauchement des ensembles de données spatiales agrégées (Dj_mean) signifie qu'un seul véhicule (10) contribue à plus d'un ensemble de données spatiales agrégées (Dj_mean).

2. Procédé selon la revendication 1,
dans lequel

> la modification des ensembles de données spatiales agrégées (Dj_mean) sera réalisée de manière aléatoire,
> et/ou dans lequel
> la modification des ensembles de données spatiales agrégées (Dj_mean) sera réalisée par changement de la taille, de la forme et/ou de l'emplacement des groupes (G) correspondants de véhicules (10).

3. Procédé selon l'une quelconque des revendications précédentes,
dans lequel

> les données de véhicule (D(t)) comprennent des données de capteur (V) et des données spatiales (P),
> et/ou dans lequel
> les données de capteur comprennent des données environnementales, des valeurs de température, des valeurs d'humidité, une intensité de la pluie, un coefficient de glissement, etc.
> et/ou dans lequel
> un point de données (Di_mean) provenant d'un seul véhicule (10) comprend des données de capteur agrégées (V) et des données spatiales agrégées (P) pour le seul véhicule (10),
> et/ou dans lequel
> un ensemble de données spatiales agrégées (Dj_mean) provenant d'un groupe de véhicules (10) comprend des données de capteur agrégées (V) et des données spatiales agrégées (P) pour le groupe (G) de véhicules (10).

4. Procédé selon l'une quelconque des revendications précédentes,
dans lequel
les données de véhicule (D(t)) au sein d'un point de données (Di_mean) seront filtrées afin d'exclure des mesures inhabituelles.

**5.** Procédé selon l'une quelconque des revendications précédentes,
dans lequel
les données de véhicule (D(t)) au sein d'un point de données (Di_mean) seront mises en évidence afin de détecter des effets environnementaux, tels que des plaques de glace dans la rue, dans des zones très restreintes au sein d'une zone géographique (Z) particulière.

**6.** Procédé selon l'une quelconque des revendications précédentes,
dans lequel

l'agrégation spatiale est réalisée à l'aide de différentes méthodologies d'agrégation pour différents services de véhicules, types de capteurs, sources de signaux et/ou types de données,
et/ou dans lequel
une méthodologie d'agrégation particulière est choisie en fonction d'un service du véhicule, d'un type de capteur, d'une source de signal et/ou d'un type de données.

**7.** Procédé selon l'une quelconque des revendications précédentes,
dans lequel

l'agrégation spatiale des données de véhicule (D(t)) est réalisée au sein de sous-ensembles de données (DZ(t)),
et dans lequel
les sous-ensembles de données (DZ(t)) sont générés à l'aide d'un partitionnement spatial des données de véhicule (D(t)), de sorte que les sous-ensembles de données (DZ(t)) sont associés, en particulier de manière dynamique, à différentes zones géographiques (Z) de tailles diverses et comprenant une quantité maximale (N) d'enregistrements au sein de chaque sous-ensemble de données (DZ(t)).

**8.** Procédé selon la revendication précédente,
dans lequel

le partitionnement spatial est fourni à l'aide d'un procédé d'indexation géospatiale,
et/ou dans lequel
le partitionnement spatial est utilisé pour réduire la quantité d'enregistrements destinés à être anonymisés en une seule exécution.

**9.** Procédé selon l'une quelconque des revendications précédentes 7 ou 8,
dans lequel

le partitionnement spatial est fourni à l'aide d'un découpage itératif d'un ensemble entrant d'enregistrements dans des zones géographiques (Z) ayant différents niveaux de résolution (L),
et/ou dans lequel
le partitionnement spatial est fourni jusqu'à ce qu'un sous-ensemble de données (DZ(t)) comprenne une quantité d'enregistrements inférieure à la quantité maximale (N) d'enregistrements.

**10.** Procédé selon l'une quelconque des revendications précédentes,
dans lequel
la quantité maximale (N) d'enregistrements sera choisie selon une capacité de calcul d'un dispositif de réalisation.

**11.** Produit-programme informatique comprenant des instructions, qui lorsque le programme est exécuté par un ordinateur, amènent l'ordinateur à mettre en œuvre un procédé selon l'une quelconque des revendications précédentes.

**12.** Dispositif (20), en particulier dispositif dorsal, comprenant :

un dispositif de mémoire (21), dans lequel est stocké un code de programme, et
un dispositif informatique (22) configuré pour exécuter le code de programme, dans lequel, lors de l'exécution du code de programme, un procédé selon l'une quelconque des revendications de procédé précédentes sera réalisé.

**13.** Dispositif (20) selon la revendication précédente,
dans lequel
le dispositif de mémoire (21) comprend une base de données pour des ensembles de données spatiales agrégées (Dj_mean).

**14.** Dispositif (20) selon l'une quelconque des revendications de dispositif précédentes,
dans lequel

le dispositif informatique (22) est configuré pour fournir des services aux véhicules, y compris des services de navigation, des services cartographiques et/ou des services de prévision, et autres, aux véhicules participants (10) à l'aide des ensembles de données agrégées (Dj_mean),
et/ou dans lequel
le dispositif informatique (22) est configuré pour fournir différents services aux véhicules en fonction d'un type de service, d'une source de signal et/ou d'un type de données.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019201530 B3

- EP 2487639 A1